# EUROPEAN PATENT APPLICATION

(11) **EP 3 832 436 A1**
(43) Date of publication of application: **09.06.2021**
(21) Application number: 19214276.8
(22) Date of filing: 06.12.2019
(51) Int. Cl.: G06F 3/01, G06F 3/0346

(54) **MOTION SENSING DATA GENERATING METHOD AND MOTION SENSING DATA GENERATING SYSTEM**

(71) Applicant: XRSpace CO., LTD., Taoyuan City 330 (TW)
(72) Inventor: HUANG, Ching-Ning, 111 Taipei City (TW); LU, Hua-Lun, 114 Taipei City (TW); HSIEH, Yi-Kang, 310 Hsinchu County (TW)
(74) Representative: Emde, Eric

(57) **Abstract**

A motion sensing data generating method and a motion sensing data generating system (100, 200) are provided. The motion sensing data generating system (100, 200) includes a motion sensing apparatus (110) and a processor (150). The processor (150) analyzes whether the motion sensing apparatus (110) is detected in the first motion sensing data. The motion sensing apparatus (110) is acted with a human body portion (B1, B2) of a user, the first motion sensing data is generated based on a first sensor (121), and the motion sensing apparatus (110) includes a second sensor (111) different from the first sensor (121). The processor (150) determines whether to generate the second motion sensing data based on both the first sensor (121) and the second sensor (111) according to the analyzed result. Accordingly, the content of the motion sensing data can be enhanced by multiple sensors.

## Description

### TECHNICAL FIELD

The present disclosure generally relates to the generation for sensing data, in particular, to a motion sensing data generating method and a motion sensing data generating system.

### BACKGROUND

To provide intuitive operation on an electronic apparatus (such as a game player, a computer, a smartphone, a smart appliance, etc.), the motion of the user may be detected, to directly operate the electronic apparatus according to the motion of the user.

In conventional approaches, some electronic apparatuses may allow the human body portion (such as a hand, a leg, a head, etc.) of the user to control the operation of these electronic apparatuses. For example, the handheld controllers are provided for controlling a virtual reality (VR) product, and each handheld controller includes a sensor to track the motion of the hands of the user. However, the generation of the motion sensing data may be limited by the type of the sensor. For example, the sensing results of some sensors may be merely used for generating the motion sening data related to position translation in three perpendicular axes, and the motion sening data about the rotation situation would not be generated.

### SUMMARY OF THE DISCLOSURE

Accordingly, the present disclosure is directed to a motion sensing data generating method and a motion sensing data generating system, in which the content of the motion sensing data may be enhanced by multiple sensors.

In one of the exemplary embodiments, a motion sensing data generating method includes, but not limited to, the following steps. Whether a motion sensing apparatus is detected in the first motion sensing data is analyzed. The motion sensing apparatus is acted with a human body portion of a user, the first motion sensing data is generated based on a first sensor, and the motion sensing apparatus includes a second sensor different from the first sensor. Whether to generate the second motion sensing data based on both the first sensor and the second sensor is determined according to the analyzed result.

In one of the exemplary embodiments, a motion sensing data generating system includes, but not limited to, a motion sensing apparatus and a processor. The processor analyzes whether a motion sensing apparatus is detected in the first motion sensing data. The motion sensing apparatus is acted with a human body portion of a user, the first motion sensing data is generated based on a first sensor, and the motion sensing apparatus includes a second sensor different from the first sensor. The processor determines whether to generate the second motion sensing data based on both the first sensor and the second sensor according to the analyzed result.

In light of the foregoing, according to the motion sensing data generating method and the motion sensing data generating system provided in one or more embodiments, whether the first sensor is able of detecting the motion of the motion sensing apparatus including the second sensor would be analyzed, and the motion sensing data for the human body portion may be generated based on two sensors according to the analyzed result. Accordingly, a flexible and convenient way to enhance the content of the motion sensing data.

It should be understood, however, that this Summary may not contain all of the aspects and embodiments of the present disclosure, is not meant to be limiting or restrictive in any manner, and that the invention as disclosed herein is and will be understood by those of ordinary skill in the art to encompass obvious improvements and modifications thereto.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a block diagram illustrating a motion sensing data generating system according to one of the exemplary embodiments of the disclosure.
FIG. 2 is a schematic diagram illustrating a motion sensing data generating system according to one of the exemplary embodiments of the disclosure.
FIG. 3 is a flowchart illustrating a motion sensing data generating method according to one of the exemplary embodiments of the disclosure.
FIG. 4 is a schematic diagram illustrating a motion tracking method according to one of the exemplary embodiments of the disclosure.
FIG. 5 is a schematic diagram illustrating a motion tracking method according to one of the exemplary embodiments of the disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

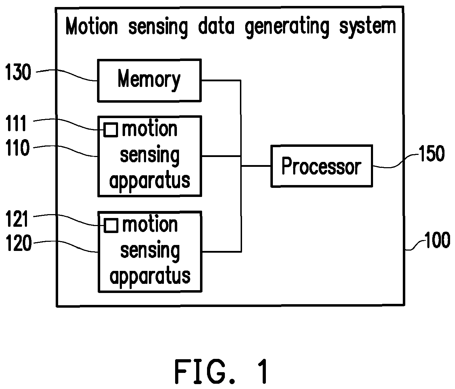

FIG. 1 is a block diagram illustrating a motion sensing data generating system 100 according to one of the exemplary embodiments of the disclosure. Referring to FIG. 1, the motion sensing data generating system 100 includes, but not limited thereto, one or more motion sensing apparatuses 110, memory 130, and processor 150. In one embodiment, the motion sensing data generating system 100 can be adapted for VR, AR, MR, XR or other reality-related technology. In some embodiments, the motion sensing data generating system 100 can be adapted for operating an external apparatus (such as a computer, a game player, a smartphone, an in-dash system, a smart appliance, etc.).

The motion sensing apparatus 110 could be a handheld controller or a wearable apparatus, such as a wearable controller, a smartwatch, an ankle sensor, a waist belt, or the likes. In one embodiment, each motion sensing apparatus 100 is wearable on one human body portion of the user. For example, the human body portion may be left or right hand, a head, left or right ankle, left or right leg, a waist, or other portions.

In one embodiment, the motion sensing apparatus 110 includes a sensor 111. The sensor 110 could be a motion sensor suach as an accelerometer, a gyroscope, a magnetometer, a laser sensor, an inertial measurement unit (IMU), an infrared ray (IR) sensor, or any combination of aforementioned motion sensors. The sensor 110 is used for sensing the motion itself, and acted with the human body portion in which itself is placed. For example, the motion sensor detects the position in a 3-dimention space and/or the rotation situation itself. The human body portion of the user may hold, wear, or carry the motion sensing apparatus 110, so that the motion sensor is acted with the human body portion. Therefore, the motion of the motion sensor may represent the motion of the human body portion.

In another embodiment, the sensor 110 could be an image sensor, other types of sensors, or the combination of multiple sensors.

In one embodiment, the motion sensing data generating system 100 may further include one or more motion sensing apparatuses 120. The motion sensing apparatus 120 could be a head-mounted display (HMD), a smartphone, a camera, a laptop, a positioning apparatus, or the likes. In one embodiment, the motion sensing apparatus 120 includes a sensor 121. The sensor 121 could be an image sensor such as a camera, such as a monochrome camera or a color camera, a deep camera, a video recorder, or other image sensor capable of capturing images.

In some embodiments, the sensor 110 may be used to capture toward one or more human body portions of the user, to generate the images including one or more human body portions of the user.

In another embodiment, the sensor 120 could be a motion sensor, other types of sensors, or the combination of multiple sensors.

Memory 130 may be any type of a fixed or movable Random-Access Memory (RAM), a Read-Only Memory (ROM), a flash memory or a similar device or a combination of the above devices. In some embodiments, the memory 130 can be used to store program codes, device configurations, buffer data or permanent data (such as motion sensing data, images, motion sensing result, etc.), and these data would be introduced later.

The processor 150 is coupled to the memory 130, and the processor 150 is configured to load the program codes stored in the memory 130, to perform a procedure of the exemplary embodiment of the disclosure. In some embodiments, functions of the processor 150 may be implemented by using a programmable unit such as a central processing unit (CPU), a microprocessor, a microcontroller, a digital signal processing (DSP) chip, a field programmable gate array (FPGA), etc. In one embodiment, the functions of the processor 150 may also be implemented by an independent electronic device or an integrated circuit (IC), and operations of the processor 150 may also be implemented by software.

It should be noticed that the processor 150 may or may not be disposed with the motion sensing apparatuses 110 and 120. However, the motion sensing apparatuses 110 and 120 and the processor 150 may further include or be connected with communication transceivers with compatible communication technology, such as Bluetooth, Wi-Fi, IR, or physical transmission line, to transmit/ receive data with each other.

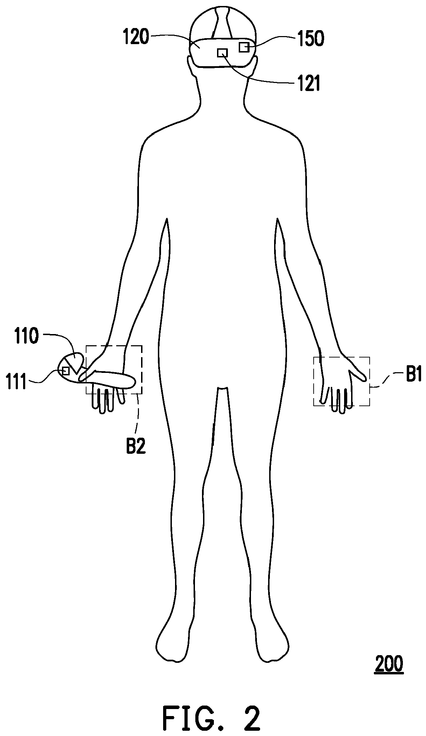

FIG. 2 is a schematic diagram illustrating a motion sensing data generating system 200 according to one of the exemplary embodiments of the disclosure. Referring to FIG. 2, the motion sensing data generating system 200 includes a motion sensing apparatus 110 (which is a handheld controller for example) and a motion sensing apparatus 120 (which is an HMD for example). The sensor 121 (which is a stereo camera for example) and the processor 150 are embedded in the HMD, and the sensor 121 may be configured to capture camera images toward the operating portion B1 (i.e. the left hand of the user) and the operating portion B2 (i.e. the right hand of the user). In addition, the sensor 111 (which is an IMU for example) is embedded in the handheld controller, to obtain the motion sensing result of the operating portion B2.

It should be noted that there would be more motion sensing apparatuses 110 provided in the motion sensing data generating system 100 or 200. For example, the motion sensing data generating system 200 further includes two ankle sensors and a waist belt. However, the number of the motion sensing apparatuses 110 is not limited thereto.

To better understand the operating process provided in one or more embodiments of the disclosure, several embodiments will be exemplified below to elaborate the operating process of the motion sensing data generating system 100. The devices and modules in the motion sensing data generating system 100 are applied in the following embodiments to explain the control method provided herein. Each step of the control method can be adjusted according to actual implementation situations and should not be limited to what is described herein.

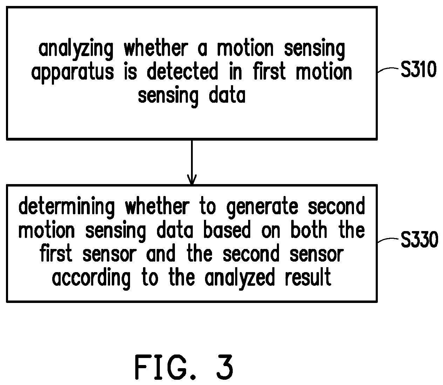

FIG. 3 is a flowchart illustrating a motion sensing data generating method according to one of the exemplary embodiments of the disclosure. Referring to FIG. 3, the processor 150 analyzes whether the motion sensing apparatus 110 is detected in the first motion sensing data (step S310). Specifically, the user may hold, wear, or carry the motion sensing apparatus 110. Specifically, the first motion sensing data is related to the motion of the human body portion and/or the motion sensing apparatus 110 in which the motion sensing apparatus 110 is acted with the human body portion. The first motion sensing data is generated based on the sensor 121.

In one embodiment, the sensor 121 is an image sensor, and the processor 150 generates the first motion sensing data based on images captured by the image sensor of the motion sensing apparatus 120. In one embodiment, the processor 150 may determine the motion of the human body portion existed in the images, to generate the analyzed result. That means the motion of the human body portion is related to the analyzed result.

In some embodiments, the processor 150 may detect whether the human body portion acted with the motion sensing apparatus 120 is detected in the image. In one embodiment, the human body portion in the image would be identified through a machine learning technology (such as deep learning, artificial neural network (ANN), or support vector machine (SVM), etc.). In another embodiment, the human body portion may be identified through other object identification technologies, such as the binary classifier, the adaptive boosting (Adaboost), etc.

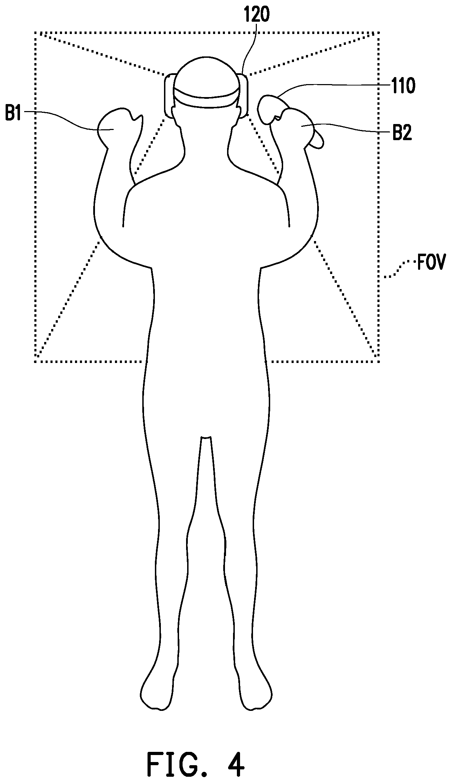

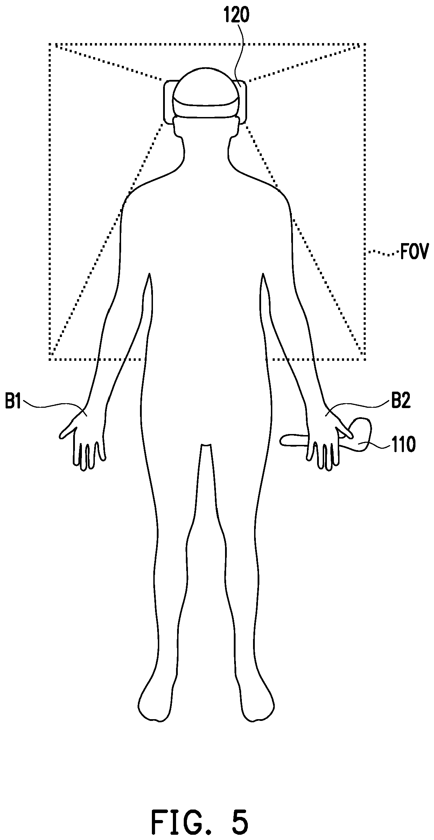

For example, FIG. 4 is a schematic diagram illustrating a motion tracking method according to one of the exemplary embodiments of the disclosure. Referring to FIG. 4, the human body portion B2 holding the motion sensing apparatus 110 exists in the field of view FOV of the image sensor of the motion sensing apparatus 120. For another example, FIG. 5 is a schematic diagram illustrating a motion tracking method according to one of the exemplary embodiments of the disclosure. Referring to FIG. 5, the human body portion B2 holding the motion sensing apparatus 110 does not exist in the field of view FOV of the image sensor of the motion sensing apparatus 120.

In another embodiment, the processor 150 may compare the displacement or trajectory of the human body portion based on the first motion sensing data with one or more predefined trajectories and/or displacements. In some embodiments, the sensing strength and the pixel position corresponding to the human body portion in the image can be used for estimating depth information of the human body portion (i.e., a distance relative to the motion sensing apparatus 120 or other reference apparatuses) and estimating 2D position of the human body portion at a plane parallel to the motion sensing apparatus 120. The processor 150 can generate a 3D position in a predefined coordinate system according to the distance and the 2D position of the human body portion, so as to determine the displacement of the human body portion. In one embodiment, if the first motion sensing data meets the predefined trajectories and/or displacement, the processor 150 may determine the motion sensing apparatus 110 is acted with the human body portion and determine the analyzed result is that the motion sensing apparatus 110 is detected in the first motion sensing data. On the other hand, the processor 150 may determine the motion sensing apparatus 110 is not detected in the first motion sensing data.

In still another embodiments, the sensor 110 is a motion sensor, the sensor 120 is an image sensor, and the processor 150 may determine whether the motion of the human body portion is identical in both the motion sensing result obtained from the motion sensor and the images captured by the image sensor. Regarding different types of sensor 110, motion sensing result could be acceleration, rotation, magnetic force, orientation, distance and/or position (called thereafter) and could be used for generating position, displacement, and/rotation data. For example, the displacement of the human body portion can be estimated through double integral on the detected acceleration of the sensor 110 in three axes. The displacement, the position and/or the rotation between the motion sensing result and the images may be compared. If the compared result is identical, the processor 150 determines the analyzed result is that the motion sensing apparatus 110 is detected in the first motion sensing data. On the other hand, if the compared result is not identical, the processor 150 determines the motion sensing apparatus 110 is not detected in the first motion sensing data.

In some embodiments, the processor 150 may further identify the gesture of the hand in the image. For example, the holding gesture would be considered as the user's hand is holding the motion sensing apparatus 110.

It should be noticed that, before the processor 150 determines the analyzed result, the processor 150 may check whether the motion sensing apparatus 110 is activated. The variation, displacement, and/or rotation situation based on sensor 110 would be used to confirm the motion sensing apparatus 110 is not still. If the motion sensing apparatus 110 is activated, then the processor 150 would determine the analyzed result.

After the analyzed result is determined, the processor 150 may determine whether to generate the second motion sensing data based on both the sensors 111 and 121 according to the analyzed result (step S330). Specifically, if the motion sensing apparatus 110 is detected in the first motion sensing data, it means the first motion sensing data may be useful to determine the motion of the motion sensing apparatus 110 or the corresponding human body portion. On the other hand, the first motion sensing data may be useless if the motion sensing apparatus 110 is not detected in the first motion sensing data.

In one embodiment, the processor 150 may generate the second motion sensing data based on both the sensor 111 and 121 if the analyzed result is that the motion sensing apparatus 110 is detected in the first motion sensing data. In other words, the second motion sensing data is generated based on both motion sensing result of the sensor 111 and images captured by the sensor 121. The motion sensor of the motion sensing apparatus 110 may sense the motion of a corresponding human body portion of the user, which carries a motion sensing apparatus 110, for a time period, and the processor 150 may generate a sequence of third motion sensing data from the motion sensing result (e.g., sensed strength values, degree, etc.) of the motion sensor at multiple time points within the time period. For one example, the third motion sensing data includes a 3-degree of freedom (3-DoF) information. For another example, the first motion sensing data includes a relative position and/or displacement of a human body portion in the 2D/3D space.

In one embodiment, the second motion sensing data could be the combination of the first and third motion sensing data. For example, a weighted combination of the rotation data and the position data based on the motion sensor and the image sensor. The value of the position or rotation data would be provided with weights, and the second motion sensing data is generated based on the weighted calculation of the position or rotation data obtained from two sensors. Accordingly, the accuracy of the second motion sensing data may be improved.

In another embodiment, the first motion sensing data include 3-DoF information, and the second motion sensing data include 6-DoF information. Taking FIG. 4 as an example, the pose of the human body portion B2 would be estimated according to the acceleration, the rotation, and the magnetic force sensed on the human body portion B2, and the rotation information of the human body portion B2 in a predefined coordinate system can be determined based on motion sensing result of the sensor 110. The acceleration data could be used to estimating the displacement of the human body portion B2 (i.e., 3-DoF information). On the other hand, the sensing strength and the pixel position corresponding to the human body portion B2 in image captured by the sensor 121 can be used for estimating depth information of the human body portion B2 (i.e., a distance relative to the motion sensing apparatus 120) and estimating 2D position of the human body portion B2 at a plane parallel to the sensor 121, and further generating a 3D position in the predefined coordinate system according to the distance and the 2D position of the human body portion B2. Then, the rotation and 3D position of the human body portion B2 in the predefined coordinate system can be fused to generate 6-DoF information.

In another embodiment, the processor 150 may generate the second motion sensing data based on merely the sensor 111 if the analyzed result is that the motion sensing apparatus 110 is not detected in the first motion sensing data. In one embodiment, the second motion sensing data may include 3-DoF information based on the motion sensing result of the sensor 111 but not 6-DoF information. In another embodiment, the second motion sensing data could be the acceleration, the rotation, the magnetic force, the position, or other data merely based on the first motion sensing data.

Taking FIG. 5 as an example, there would be no motion sensing data for the body portion B2 merely based on the motion sensing apparatus 120 in which the human body portion B2 is not in the field of view FOV of the image sensor of the motion sensing apparatus 120. However, the motion sensing apparatus 110 can keep tracking the motion of the human body portion B2.

It should be noted that in some embodiments, no matter what the analyzed result is, the processor 150 may generate the second motion sensing data merely based on the sensor 110.

In summary, the exemplary embodiments described above depicted motion sensing data generating method and motion sensing data generating system may determine whether the first motion sensing data is reliable to determine the motion of the human body portion, and further, generate the second motion sensing data based on both two sneors or merely one sensor. Then, the content of the second motion sensing data may be enhanced.

## Claims

1. A motion sensing data generating method, **characterized by** comprising:
analyzing whether a motion sensing apparatus (110) is detected in first motion sensing data, wherein the motion sensing apparatus (110) is acted with a human body portion (B1, B2) of a user, the first motion sensing data is generated based on a first sensor (121), and the motion sensing apparatus (110) comprises a second sensor (111) different from the first sensor (121); and
determining whether to generate second motion sensing data based on both the first sensor (121) and the second sensor (111) according to the analyzed result.

2. The motion sensing data generating method according to claim 1, **characterized in that** the step of determining whether to generate the second motion sensing data based on both the first sensor (121) and the second sensor (111) according to the analyzed result comprises:
generating the second motion sensing data based on both the first sensor (121) and the second sensor (111) in response to the analyzed result being that the motion sensing apparatus (110) is detected in the first motion sensing data; and
generating the second motion sensing data based on merely the second sensor (111) in response to the analyzed result being that the motion sensing apparatus (110) is not detected in the first motion sensing data.

3. The motion sensing data generating method according to claim 1, **characterized in that** the first sensor (121) comprises an image sensor, the first motion sensing data is generated based on images captured by the image sensor, and the step of analyzing whether the motion sensing apparatus (110) is detected in the first motion sensing data comprises:
determining motion of the human body portion (B1,B2) existed in the images, and the motion of the human body portion (B1, B2) is related to the analyzed result.

4. The motion sensing data generating method according to claim 1, **characterized in that** the first sensor (121) comprises an image sensor, the second sensor (111) comprises a motion sensor, and the step of analyzing whether the motion sensing apparatus (110) is detected in the first motion sensing data comprises:
identifying the human body portion (B1, B2) acted with the motion sensing apparatus (110); and
determining whether the motion of the human body portion (B1, B2) is identical in both motion sensing result obtained from the motion sensor and images captured by the image sensor.

5. The motion sensing data generating method according to claim 2, **characterized in that**
the second motion sensing data comprises 6-degree of freedom (DoF) data in response to the analyzed result being that the motion sensing apparatus (110) is detected in the first motion sensing data; and
the second motion sensing data comprises 3-DoF information in response to the analyzed result being that the motion sensing apparatus (110) is detected in the first motion sensing data.

6. A motion sensing data generating system (100, 200), comprising:
a motion sensing apparatus (110); and
a processor (150), **characterized in that** the processor (150) configured to perform:
analyzing whether the motion sensing apparatus (110) is detected in first motion sensing data, wherein the motion sensing apparatus (110) is acted with a human body portion (B1, B2) of a user, the first motion sensing data is generated based on a first sensor (121), and the motion sensing apparatus (110) comprises a second sensor (111) different from the first sensor (121); and
determining whether to generate second motion sensing data based on both the first sensor (121) and the second sensor (111) according to the analyzed result.

7. The motion sensing data generating system (100, 200) according to claim 6, **characterized in that** the processor (150) is configured to perform:
generating the second motion sensing data based on both the first sensor (121) and the second sensor (111) in response to the analyzed result being that the motion sensing apparatus (110) is detected in the first motion sensing data; and
generating the second motion sensing data based on merely the second sensor (111) in response to the analyzed result being that the motion sensing apparatus (110) is not detected in the first motion sensing data.

8. The motion sensing data generating system (100, 200) according to claim 6, wherein the first sensor (121) comprises an image sensor, the first motion sensing data is generated based on images captured by the image sensor, **characterized in that** the processor (150) is configured to perform:
determining motion of the human body portion (B1, B2) existed in the images, and the motion of the human body portion (B1, B2) is related to the analyzed result.

9. The motion sensing data generating system (100, 200) according to claim 6, wherein the first sensor (121) comprises an image sensor, the second sensor (111) comprises a motion sensor, **characterized in that** the processor (150) is configured to perform:
identifying the human body portion (B1, B2) acted with the motion sensing apparatus (110); and
determining whether the motion of the human body portion (B1, B2) is identical in both motion sensing result obtained from the motion sensor and images captured by the image sensor.

10. The motion sensing data generating system (100, 200) according to claim 6, **characterized in that**
the second motion sensing data comprises 6-degree of freedom (DoF) data in response to the analyzed result being that the motion sensing apparatus (110) is detected in the first motion sensing data; and
the second motion sensing data comprises 3-DoF information in response to the analyzed result being that the motion sensing apparatus (110) is detected in the first motion sensing data.
